# EUROPÄISCHE PATENTSCHRIFT

(11) **EP 1 096 649 B1**
(45) Veröffentlichungstag und Bekanntmachung des Hinweises auf die Patenterteilung: **10.12.2003**
(21) Anmeldenummer: 00810972.0
(22) Anmeldetag: 20.10.2000
(51) Int. Cl.: H02K 23/18

(54) **Bohrgerät**
Drilling apparatus
Outillage de sondage

(30) Priorität: 29.10.1999 DE 19952332
(43) Veröffentlichungstag der Anmeldung: 02.05.2001
(73) Patentinhaber: HILTI Aktiengesellschaft, 9494 Schaan (LI)
(72) Erfinder: Burger, Helmut, 82272 Moorenweis (DE); Troeder, Lutz, 82299 Türkenfeld (DE); Lübkert, Ernst-Rudolf, 86899 Landsberg (DE); Braml, Georg, 86899 Landsberg (DE)
(74) Vertreter: Wildi, Roland

(56) Entgegenhaltungen:
- EP-A- 0 329 249

## Beschreibung

Die Erfindung betrifft ein handgeführtes Bohr- oder Schraubgerät gemäss dem Oberbegriff des Patentanspruchs 1.

Aus der US-3 440 465 ist ein handgeführtes Elektrowerkzeug bekannt, bei dem die Drehrichtung des Antriebsmotors umkehrbar ist. Dieses Elektrowerkzeug weist ein Gehäuse und einen senkrecht vom Gehäuse abragenden Handgriff auf. Über eine dem Handgriff gegenüberliegende Öffnung im Gehäuse ist ein Betätigungselement eines im Gehäuse angeordneten Schaltkörpers frei zugänglich, das in Umfangsrichtung des Antriebsmotors beispielsweise aus einer Stellung "Linkslauf" in eine Stellung "Rechtslauf" begrenzt versetzbar ist. Dieser Schaltkörper steht in drehschlüssiger Verbindung mit einem koaxial zum Antriebsmotor angeordneten Kohlebürstenhalterring an dem sich zwei einander diametral gegenüberliegende Kohlebürstenhalter mit jeweils einer Kohlebürste befinden. Diese Kohlebürstenhalter sind entlang einer im wesentlichen parallel zur Längserstreckung des Handgriffs verlaufenden Achse angeordnet.

Der Kohlebürstenhalterring ist zwischen zwei miteinander verschraubten Bauteilen angeordnet und in Umfangsrichtung begrenzt verdrehbar. Im Bereich des Kohlebürstenhalterringes ist ein Teil des Gehäuses von einer abnehmbaren Kappe gebildet, die den Schaltkörper und den Kohlebürstehalterring abdeckt. Im Inneren der Kappe befindet sich ein weiteres Gehäuseteil, das mit einer Aufnahmebohrung versehen ist. Eines der beiden Bauteile, zwischen denen der Kohlebürstenhalterring angeordnet ist, steht mit Hilfe einer Schraubverbindung fest mit dem weiteren Gehäuseteil in Verbindung. Ein dem Kommutator des Antriebsmotors zugewandter Teil der Aufnahmebohrung dient der Aufnahme eines Lagers, das im kommutatorseitigen freien Endbereich einer Rotorwelle des Antriebsmotors angeordnet ist. Der von dem Kommutator abgewandte Teil der Aufnahmebohrung weist einen kleineren Durchmesser auf und dient der Aufnahme und einer Lagerstelle des Schaltkörpers.

Die Montage dieses bekannten handgeführten Elektrowerkzeugs setzt sich aus einer grossen Anzahl von Arbeitsschritten zusammen. Zuerst erfolgt der Einbau des Stators in das Gehäuse. Anschliessend werden der Kohlebürstenhalterring und die mit diesem zusammenwirkenden Bauteile an dem weiteren Gehäuseteil befestigt. Anschliessend wird der Rotor des Antriebsmotors durch eine werkzeugaufnahmeseitige Öffnung des Gehäuses in den Stator geschoben und der Schaltkörper auf das weitere Gehäuseteil aufgesteckt. Zum Schluss erfolgt das Verschliessen der werkzeugaufnahmeseitigen Öffnung des Gehäuses und das Aufsetzen der Kappe auf den restlichen Teil des Gehäuses. Aufgrund der grossen Anzahl von Arbeitsschritten, die in Summe gesehen sehr viel Zeit benötigen, ist eine wirtschaftliche Herstellung nicht möglich.

EP 329 249 A1 zeigt ein Handbohrgerät mit einem Gehäuse, einem vom Gehäuse im wesentlichen senkrecht abragenden Handgriff, einem elektrischen Antriebsmotor, einem koaxial zum Antriebsmotor angeordneten, in Umfangsrichtung begrenzt verdrehbaren, Kohlebürstenhalterring und einem drehschlüssig mit diesem zusammenwirkenden Schaltkörper, wobei der Kohlebürstenhalterring zwei entlang einer im wesentlichen parallel zur Längserstreckung des Handgriffs verlaufenden Achse angeordnete, einander gegenüberliegenden Kohlebürstenhalter und der Schaltkörper auf einer dem Handgriff gegenüberliegenden Seite ein Betätigungselement aufweist, der Kohlebürstenhalterring axial formschlüssig mit dem Stator in Verbindung bringbar ist, indem der Kohlebürstenhalterring wenigstens zwei vom Stator wegweisende Anschlagflächen aufweist, die mit wenigstens zwei Gegenflächen des Stators zusammenwirken und sich jede Anschlagfläche an einem in Richtung Stator ragenden Vorsprung des Kohlebürstenhalterringes befindet.

Der Erfindung liegt die Aufgabe zugrunde, ein wirtschaftliches Bohr- oder Schraubgerät zu schaffen, das einfach im Aufbau und schnell montierbar ist.

Die Lösung dieser Aufgabe erfolgt mit einem Bohr- und/oder Schraubgerät, welches die im Patentanspruch 1 angeführten Merkmale aufweist.

Aufgrund der erfindungsgemässen axial formschlüssigen Festlegung des Kohlebürstenhalterringes an dem Stator ist es möglich diese beiden Teile vor dem Einsetzen des Gehäuses als Baugruppe zusammenzufügen, die schnell und einfach in nur einem Arbeitsgang in das Gehäuse einsetzbar ist.

Damit eine Festlegung des Kohlebürstenhalterringes an dem Stator möglich ist, weist der Kohlebürstenhalterring wenigstens zwei vom Stator wegweisende Anschlagflächen auf, die mit wenigstens zwei Gegenflächen des Stators zusammenwirken. Sowohl die Anschlagflächen als auch die Gegenflächen erstrecken sich in einer im wesentlichen senkrecht zu einer Längsachse des Antriebsmotors verlaufenden Richtung.

Eine begrenzte Verdrehbarkeit des Kohlebürstenhalterringes gegenüber dem Stator wird beispielsweise dadurch erreicht, indem sich vorteilhafterweise jede Anschlagfläche an einem in Richtung Stator ragenden Vorsprung des Kohlebürstenhalterringes befindet. Jeder der beiden Vorsprünge ragt beispielsweise in einen Führungsbereich des Stators, der sich in einem dem Kohlebürstenhalterring zugewandten Endbereich des Stators befindet. Jeder Führungsbereich erstreckt sich über einen Teil des Umfangs des Stators und wird in beiden Richtungen durch einen Anschlag begrenzt, an denen die Vorsprünge-abhängig von der Stellung des Kohlebürstenhalters - zur Anlage gelangen.

Damit der Kohelbürstenhalterring schnell an dem Stator angeordnet werden kann, ohne dass ein zusätzliches Montagewerkzeug zur Hilfe genommen werden muss, ist der Vorsprung in radialer Richtung biegbar ausgebildet.

Vorteilhafterweise verjüngt sich ein zwischen der Anschlagfläche und dem freien Ende des Vorsprungs befindlicher Abschnitt zum freien Ende des Vorsprungs hin. Dadurch wird beim axialen zusammenfügen des Stators und des Kohlebürstenhalterringes ein automatisches Auseinanderbiegen der beiden Vorsprünge erreicht, sobald der sich verjüngende Abschnitt der Vorsprünge mit einer entsprechenden Aussenkontur des Stators zusammentrifft. Beim Erreichen der Endlage des Kohlebürstenhalterringes können die Anschlagflächen der Vorsprünge die Gegenflächen des Stators hintergreifen, indem die nach aussen gebogenen Vorsprünge wiederum in ihre normale Lage zurückschwenken können.

Um eine möglichst schlanke Bauweise des Bohr- oder Schraubgerätes in einer senkrecht zur Längserstreckung des Handgriffes und senkrecht zur Längserstreckung des Antriebsmotors erreichen zu können, ist zweckmässigerweise jeder Vorsprung im Bereich eines Kohlebürstenhalters angeordnet.

Damit die beiden Verbindungsbereiche zwischen dem Stator und dem Kohlebürstenhalter einerseits gut erreichbar sind, andererseits der Kohlebürstenhalterring gegenüber dem Stator in Umfangsrichtung begrenzt verdreht werden kann, ist die Gegenfläche vorzugsweise im Umfangsbereich des Stators angeordnet und erstreckt sich über einen Teil des Umfangs des Stators.

Um ein allfälliges Spiel zwischen den Anschlagflächen des Kohlebürstenhalterringes und den Gegenflächen des Stators ausschliessen zu können, sind vorteilhafterweise zwischen dem Kohlebürstenhalterrring und dem Stator wenigstens zwei die Anschlagflächen gegen die Gegenflächen drückende Federn angeordnet. Bei den Federn handelt es sich beispielsweise um Druckfedern, die dafür sorgen, dass der Stator und der Kohlebürstenhalterring auseinandergedrückt werden, damit die Anschlagflächen und die Gegenflächen aneinander liegen und dass der Kohlebürstenhalterring in der entsprechenden Stellung-Linkslauf oder Rechtslauf - gehalten wird.

Mit Hilfe der axial formschlüssigen Verbindung wird der Kohlebürstenhalterring gegenüber dem Stator nur axial festgelegt. Die radiale Abstützung und die drehbare Lagerung des Kohlebürstenhalterringes erfolgt vorzugsweise über eine mit der Aussenkontur des Kohlebürstenhalterringes zusammenwirkende Lagerstelle an der Innenwandung des Gehäuses.

Die Erfindung wird anhand von Zeichnungen, die ein Ausführungsbeispiel wiedergeben, näher erläutert. Es zeigen:
- Fig. 1: Eine Seitenansicht des erfindungsgemässen Bohr- oder Schraubgerätes
- Fig.2: einen kommutatorseitigen Bereich des erfindungsgemässen Bohr- oder Schraubgerätes; ohne Gehäuse und ohne Spannfeder, die mit den Kohlebürsten zusammenwirken;

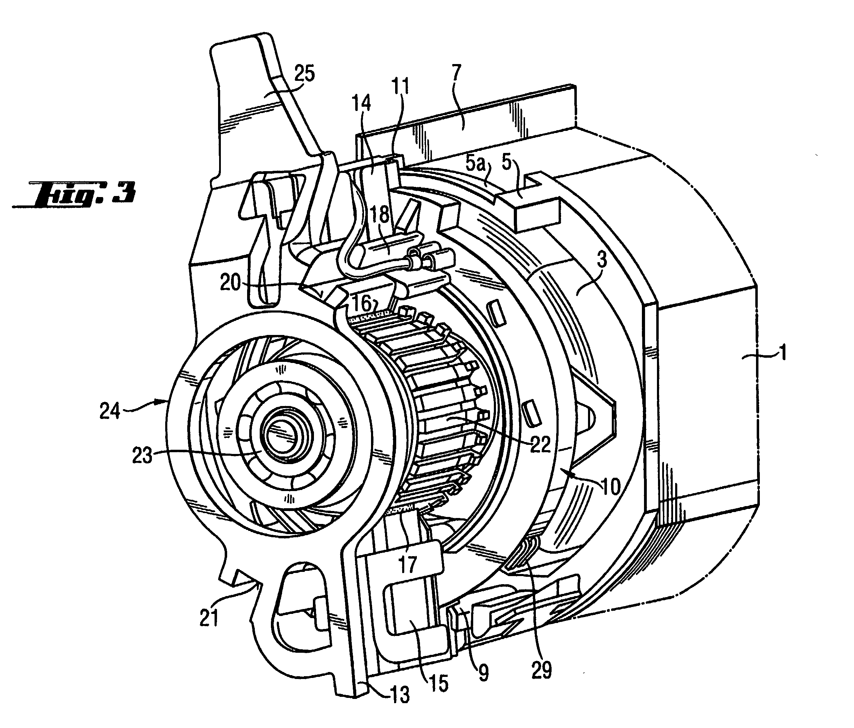

- Fig.3: eine weitere Ansicht des kommutatorseitigen Bereiches, ohne Gehäuse und ohne Spannfedern;
- Fig. 4: eine Seitenansicht des Bereiches gemäss Fig. 2; ohne Gehäuse;

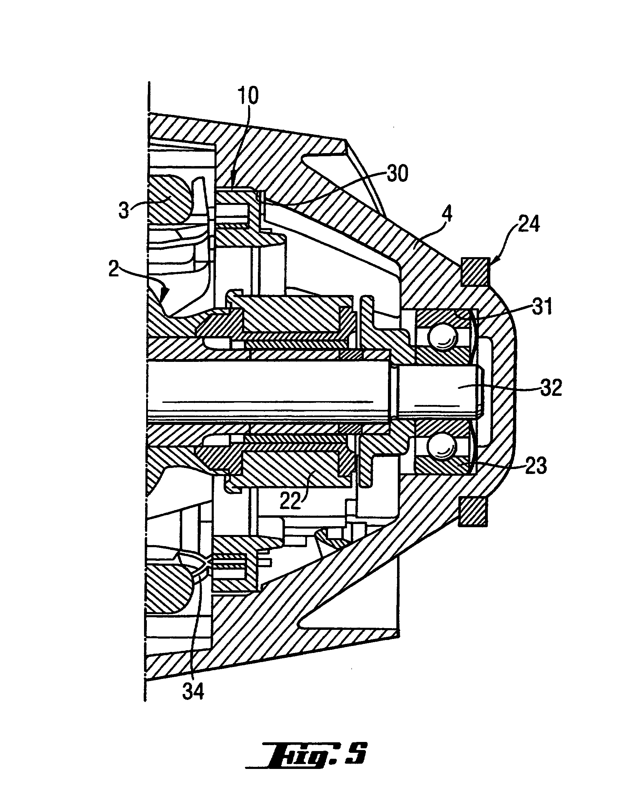

- Fig. 5: einen Schnitt durch das Bohr- oder Schraubgerät gemäss Fig. 4 entlang einer Mittellängsachse eines Antriebsmotors.

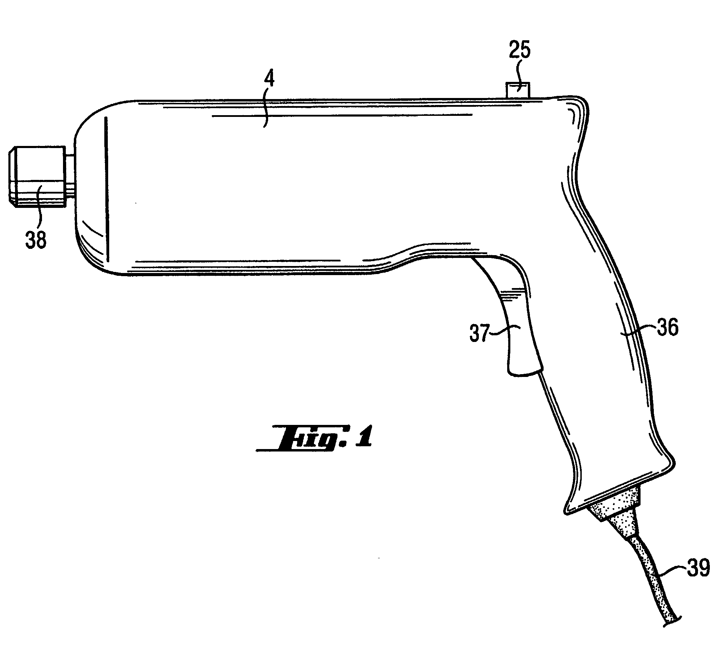

Wie die Fig. 1 zeigt, weist das erfindungsgemässe Bohr- oder Schraubgerät ein Gehäuse 4, einen Handgriff 36, einen Betätigungsschalter 37 und eine Werkzeugaufnahme 38 in einem ersten freien Endbereich des Gehäuses 4 auf, in die ein nicht dargestelltes Bohroder Schraubwerkzeug einsetzbar ist. Der Handgriff 36 befindet sich an einem, dem ersten freien Endbereich gegenüberliegenden zweiten Endbereich und ragt im wesentlichen senkrecht von dem Gehäuse 4 ab. Der Betätigungsschalter 37 ist in einem, der Werkzeugaufname 38 zugewandten, Bereich des Handgriffes 36 angeordnet. Mittels einer elektrischen Verbindung 39, die aus dem freien Ende des Handgriffes 36 ragt, ist das Bohr- oder Schraubgerät mit einer externen Stromquelle in Verbindung bringbar. Auf einer dem Handgriff gegenüberliegenden Seite des Gehäuses 4 ragt ein Betätigungselement 25, mit dessen Hilfe die Drehrichtung der Werkzeugaufnahme 38 umkehrbar ist.

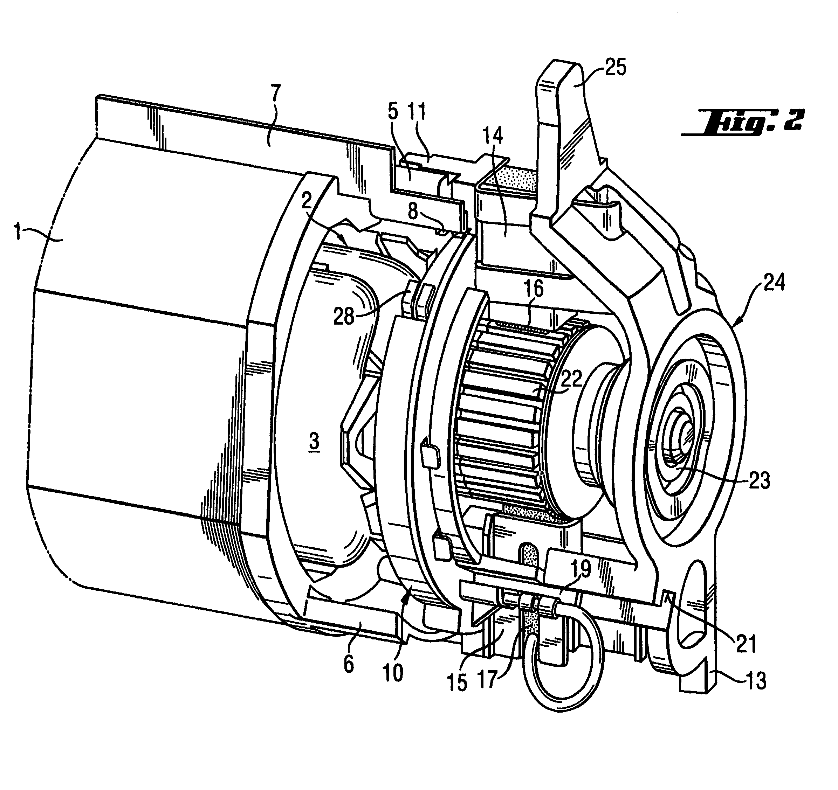

Wie den Fig. 2. bis 5 zu entnehmen ist, befindet sich im Innern des Gehäuses 4 ein Antriebsmotor, ein sich an den Antriebsmotor anschliessender Kohlebürstenhalterring 10 und ein drehschlüssig mit dem Kohlebürstenhalterring 10 in Verbindung stehender Schaltkörper 24.

Der Antriebsmotor weist einen Stator 1 mit einer Wicklung 3, einen Rotor 2 und einen Kommutator auf, der sich auf einer Rotorwelle 32 des Antriebsmotors befindet. Am freien Ende dieser Rotorwelle 32 ist ein Lager 23 aufgebracht, über das sich die Rotorwelle 32 in einer entsprechenden nicht dargestellten Aufnahmebohrung des Gehäuses 4 abstützt. An einem dem Kohlebürstenhalterring 10 zugewandten Endbereich weist das Gehäuse 4 zwei einander im wesentlichen diametral gegenüberliegende, vorstehende, teilkreisförmig ausgebildete Führungsbereiche 5, 6 auf, die in Bezug auf die Umfangsrichtung des Stators 1 an ihren freien Enden mit jeweils einem Anschlag versehen sind. Jeder dieser Führungsbereiche 5, 6 weist auf der Aussenseite eine Vertiefung 5a, 6a auf, die sich zwischen den beiden Anschlägen erstreckt. Diese Vertiefungen 5a, 6a bilden eine von dem Kohlebürstenhalterring 10 abgewandte Gegenfläche 35.

Diese Gegenflächen 35 werden hintergriffen von zwei Vorsprüngen 11 des Kohlebürstenhalters 10, die jeweils eine mit den Gegegenflächen 35 zusammenwirkende Anschlagfläche 12 aufweisen. Jeder Vorsprung 11 weist zwischen der Anschlagfläche 12 und dem freien Ende des Vorsprungs 11 einen Abschnitt auf, der sich zum freien Ende und zur radialen Aussenkontur des Vorsprungs 11 hin verjüngt.

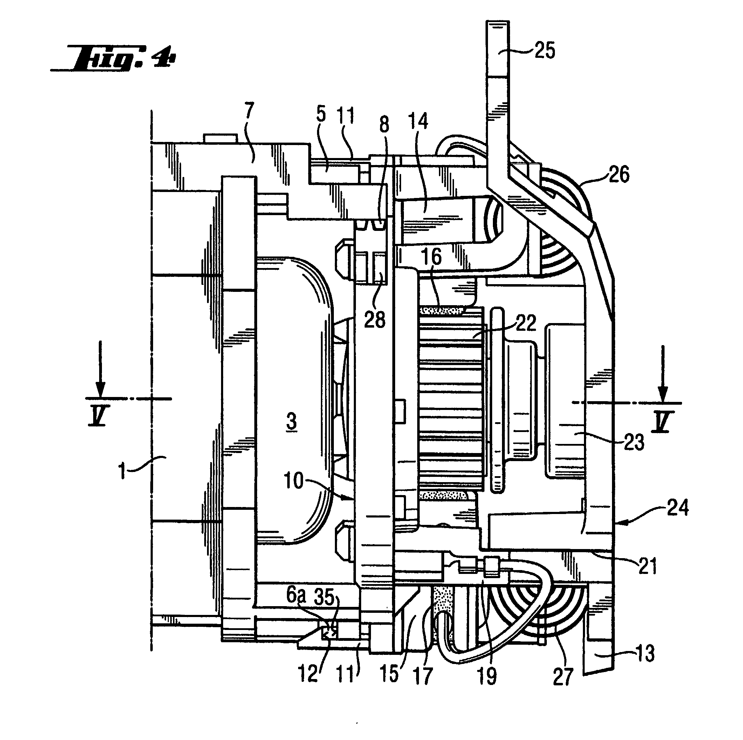

Im Bereich jedes Vorsprunges 11 ist der Kohlebürstenhalterring 10 mit einem Kohlebürstenhalter 14, 15 versehen, der auf einer dem Vorsprung 11 gegenüberliegenden Seite des Kohlebürstenhalterringes 10 von diesem abragt und über dem Kommutator 22 des Antriebsmotors angeordnet ist. Innerhalb der Kohlebürstenhalter 14, 15 befindet sich eine Kohlebürste 16, 17, die mit einer nur in Fig. 4 dargestellten Feder 26, 27 gegen die Aussenkontur des Kommutators 22 gedrückt wird. Beide Kohlebürstenhalter 14, 15 sind entlang einer im wesentlichen parallel zur Längserstreckung des Handgriffes 36 verlaufenden Achse angeordnet. Auf diese Weise ist es möglich, das Bohr- oder Schraubgerät in einer senkrecht zur Längserstreckung des Handgriffes 36 verlaufenden Richtung schlank auszubilden.

Der Kohlebürstenhalterring 10 weist an einer dem Antriebsmotor zugewandten Seite Vertiefungen auf, in denen zwei voneinander getrennte, sich über einen Teil des Umfangsbereiches des Kohlebürstenhalterringes 10 erstreckende Kontaktfedern 28, 29 untergebracht sind. Beide Kontaktfedern 28, 29 besitzen eine elektrische Anschlussfahne, die in einer vom Antriebsmotor abgewandten Richtung den Kohlebürstenhalterring 10 durchsetzt und von diesem etwas abragt. Auf jeder dieser beiden Anschlussfahnen steckt ein elektrischer Stecker der mit einer mit dem Kommutator 22 zusammenwirkenden Kohlebürste 16, 17 verbunden ist.

Die Kontaktfedern 28, 29 sind an ihren Endbereichen mit Kontakten versehen, die mit der Wicklung 3 des Antriebsmotors über Stromschienen 7 in Verbindung stehende Gegenkontakten 8, 9 elektrisch verbindbar sind. In den Zeichnungen ist nur eine Stromschiene dargestellt.

Im Bereich der beiden Anschlussfahnen ragen von dem Kohlebürstenhalterring 10 in einer von dem Antriebsmotor abgewandten Richtung zwei Mitnehmer 19, 18 ab, die drehschlüssig in zwei Ausnehmungen 20, 21 des Schaltkörpers 24 ragen. Diese Ausnehmungen 20, 21 sind an der Aussenkontur zweier in Richtung Antriebsmotor von dem Schaltkörper 24 abragender Nasen angeordnet. Der Schaltkörper 24 ist mit einer Bohrung versehen, deren Innendurchmesser grösser ist als der Aussendurchmesser des auf der Rotorwelle 32 angeordneten Lagers.

Im kommutatorseitigen Bereich ist das Gehäuse 4 des erfindungsgemässen Bohr- oder Schraubgerätes topfförmig ausgebildet, wobei dieser topfförmige Bereich mit einigen Ausschnitten versehen ist, um die Zugänglichkeit, insbesondere zu den Kohlebürsten 16, 17, zu gewährleisten. An der Aussenkontur befindet sich eine Lagerstelle für den Schaltkörper 24, dessen Bohrung auf den Durchmesser dieser Lagerstelle abgestimmt ist.

Im Bereich eines ersten Kohlebürstenhalters 14 ragt von dem Schaltkörper ein das Gehäuse 4 durch eine entsprechende Öffnung auf einer dem Handgriff 36 gegenüberliegenden Seite durchsetzendes Betätigungselement 25 ab, mit dessen Hilfe der Kohlebürstenhalterring 10 in Umfangsrichtung begrenzt verdrehbar ist, um die Kontaktierung zwischen den Kontakten der Kontaktfedern 28, 29 und den mit der Wicklung in Verbindung stehen Gegenkontakten 8, 9 zu ändern.

Im Bereich des zweiten Kohlebürstenhalters 15 ist der Schaltkörper 24 mit einer in Richtung Handgriff 36 abragenden Sperrnase 13 versehen, die beim Verdrehen des Kohlebürstenhalterringes 10 in den Wirkbereich des Betätigungsschalters 37 einschwenkt, so dass dieser nicht betätigt bzw. gedrückt werden kann.

## Patentansprüche

1. Handgeführtes Bohr- oder Schraubgerät mit einem Gehäuse (4), einem vom Gehäuse (4) im wesentlichen senkrecht abragenden Handgriff (36), einem elektrischen Antriebsmotor, einem koaxial zum Antriebsmotor angeordneten, in Umfangsrichtung begrenzt verdrehbaren, Kohlebürstenhalterring (10) und einem drehschlüssig mit diesem zusammenwirkenden Schaltkörper (24), wobei der Kohlebürstenhalterring (10) zwei entlang einer im wesentlichen parallel zur Längserstreckung des Handgriffs (36) verlaufenden Achse angeordnete, einander gegenüberliegenden Kohlebürstenhalter (14, 15) und der Schaltkörper (24) auf einer dem Handgriff (36) gegenüberliegenden Seite ein Betätigungselement (25) aufweist, der Kohlebürstenhalterring (10) axial formschlüssig mit dem Stator (1) in Verbindung bringbar ist, indem der Kohlebürstenhalterring (10) wenigstens zwei vom Stator (1) wegweisende Anschlagflächen (12) aufweist, die mit wenigstens zwei Gegenflächen (35) des Stators (1) zusammenwirken und sich jede Anschlagfläche (12) an einem in Richtung Stator (1) ragenden Vorsprung (11) des Kohlebürstenhalterringes (10) befindet, **dadurch gekennzeichnet, dass** der Vorsprung (11) in radialer Richtung biegbar ausgebildet ist.

2. Bohr- oder Schraubgerät nach Anspruch 1, **dadurch gekennzeichnet, dass** sich ein zwischen der Anschlagfläche (12) und dem freien Ende des Vorsprungs (11) befindlicher Abschnitt zum freien Ende des Vorsprungs (11) hin verjüngt.

3. Bohr- oder Schraubgerät nach einem der Ansprüche 1 bis 2, **dadurch gekennzeichnet, dass** jeder Vorsprung (11) im Bereich eines Kohlebürstenhalters (14, 15) angeordnet ist.

4. Bohr- oder Schraubgerät nach einem der Ansprüche 1 bis 3, **dadurch gekennzeichnet, dass** die Gegenfläche (35) im Umfangsbereich des Stators (1) angeordnet ist und sich über einen Teil des Umfangs des Stators (1) erstreckt.

5. Bohr- oder Schraubgerät nach einem der Ansprüche 1 bis 4, **dadurch gekennzeichnet, dass** zwischen dem Kohlebürstenhalterrring (10) und dem Stator (1) wenigstens zwei, die Anschlagflächen (12) gegen die Gegenflächen (35) drückende, Federn (34) angeordnet sind.

6. Bohr- oder Schraubgerät nach einem der Ansprüche 1 bis 5, **dadurch gekennzeichnet, dass** die drehbare Lagerung des Kohlebürstenhalterringes (10) über eine mit der Aussenkontur des Kohlebürstenhalterringes (10) zusammenwirkende Lagerstelle (30) an der Innenwandung des Gehäuses (4) erfolgt.

## Claims

1. Hand-held drilling and screwing apparatus with a housing (4), a handle (36) that projects substantially vertically from the housing (4), an electrical drive motor, a carbon brush guard ring (10) that is disposed coaxially in relation to the drive motor and that can rotate to a limited extent, in the peripheral direction, and a switching body (24) that functions together with the said carbon brush guard ring (10), whereby the carbon brush guard ring (10) has two carbon brush holders (14, 15), that lie opposite each other, disposed along an axis that substantially runs parallel to the longitudinal extension of the handle (36), and the switching body (24) has an operating element (25) on the side opposite the handle (36), and the carbon brush guard ring (10) can be brought axially, form-locking, into connection with the stator (1), in that the carbon brush guard ring (10) has two stop faces (12) that face away from the stator (1) and that function in conjunction with at least two abutment surfaces (35) of the stator (1) and each stop face (12) is located on a projection (11), of the carbon brush guard ring (10), that extends in the direction of the stator (1), **characterized in that** the projection (11) is developed such that it can bend in a radial direction.

2. Drilling or screwing apparatus in accordance with claim 1, **characterized in that** a section between the stop faces (12) and the free end of the projection (11) tapers towards the free end of the projection (11).

3. Drilling or screwing apparatus in accordance with claim 1 or 2, **characterized in that** each projection (11) is disposed in the area of a carbon brush holder (14, 15).

4. Drilling or screwing apparatus in accordance with one of claims 1 to 3, **characterized in that** the abutment surface (35) is disposed in the peripheral area of the stator (1) and extends over a section of the periphery of the stator (1).

5. Drilling or screwing apparatus in accordance with one of claims 1 to 4, **characterized in that** at least two springs (34), that press the stop faces (12) against the abutment surfaces (35), are disposed between the carbon brush guard ring (10) and the stator (1).

6. Drilling or screwing apparatus in accordance with one of claims 1 to 5, **characterized in that** the support, allowing rotation, of the carbon brush guard ring (10) occurs by means of a bearing (30) that functions in conjunction with the outer form of the carbon brush guard ring (10).

## Revendications

1. Outil de forage ou de vissage à guidage manuel, avec un carter (4), une poignée (36) dépassant de manière sensiblement perpendiculaire du carter (4), un moteur électrique d'entraînement, un anneau porte-balais de charbon (10) disposé coaxialement au moteur d'entraînement et à rotation limitée dans la direction circonférentielle, et un corps de commutation (24) coopérant avec le précédent en formant une liaison en rotation, l'anneau porte-balais de charbon (10) comportant deux porte-balais de charbon mutuellement opposés (14, 15) disposés le long d'un axe s'étendant de manière sensiblement parallèle à l'extension longitudinale de la poignée (36), et le corps de commutation (24) comportant, sur un côté opposé à la poignée (36), un élément d'actionnement (25), l'anneau porte-balais de charbon (10) pouvant être amené axialement en liaison par complémentarité de formes avec le stator (1) par le fait que l'anneau porte-balais de charbon (10) comporte au moins deux surfaces de butée (12), lesquelles sont opposées au stator (1) et coopèrent avec au moins deux surfaces antagonistes (35) du stator (1), et que chaque surface d'appui (12) se trouve sur une saillie (11) de l'anneau porte-balais de charbon (10) dépassant en direction du stator (1), **caractérisé en ce que** la saillie (11) est conçue de manière flexible dans la direction radiale.

2. Outil de forage ou de vissage selon la revendication 1, **caractérisé en ce qu'**une portion située entre la surface de butée (12) et l'extrémité libre de la saillie (11) se rétrécit vers l'extrémité libre de la saillie (11).

3. Outil de forage ou de vissage selon une des revendications 1 à 2, **caractérisé en ce que** chaque saillie (11) est disposée dans la région d'un porte-balais de charbon (14, 15).

4. Outil de forage ou de vissage selon une des revendications 1 à 3, **caractérisé en ce que** la surface antagoniste (35) est disposée dans la zone circonférentielle du stator (1) et s'étend sur une partie de la circonférence du stator (1).

5. Outil de forage ou de vissage selon une des revendications 1 à 4, **caractérisé en ce qu'**entre l'anneau porte-balais de charbon (10) et le stator (1) sont disposés au moins deux ressorts (34) poussant les surfaces de butée (12) contre les surfaces antagonistes (35).

6. Outil de forage ou de vissage selon une des revendications 1 à 5, **caractérisé en ce que** le montage tournant de l'anneau porte-balais de charbon (10) s'effectue par l'intermédiaire d'un point d'appui (30) qui est disposé sur la paroi intérieure du carter (4) et qui coopère avec le contour extérieur de l'anneau porte-balais de charbon (10).
